# DEMANDE DE BREVET EUROPEEN

(11) **EP 4 738 271 A1**
(43) Date de publication de la demande: **06.05.2026**
(21) Numéro de dépôt: 25196869.9
(22) Date de dépôt: 19.08.2025
(51) Int. Cl.: G06V 10/143, G06V 10/147, G06V 40/19

(54) **DISPOSITIF D ACQUISITION D'IMAGES D'UN INDIVIDU À BORD D'UN VÉHICULE**

(30) Priorité: 31.10.2024 WO PCT/FR2024/051438
(71) Demandeur: Idemia Public Security France, 92400 Courbevoie (FR)
(72) Inventeur: SIWEK, Jean-Francois, 92400 Courbevoie (FR); FERNANDES, Nelson, 92400 Courbevoie (FR)
(74) Mandataire: IPS

(57) **Abrégé**

Dispositif (1) d'acquisition d'images d'un individu à bord d'un véhicule, le dispositif (1) comprenant : une première caméra (6) configurée pour acquérir une première image montrant l'individu à bord du véhicule ; une deuxième caméra (8) configurée pour acquérir une deuxième image montrant l'individu à bord du véhicule, une unité de traitement (22) pour déterminer des données indicatives d'une position d'un iris de l'individu à partir de la première image et de la deuxième image ; une caméra infrarouge (10) configurée pour être orientée vers l'iris de l'individu à l'aide des données, puis acquérir une troisième image et une quatrième image pendant que la caméra infrarouge (10) est orientée vers l'iris ; une première source d'éclairage infrarouge (12) configurée pour éclairer l'iris pendant l'acquisition de la troisième image ; et une deuxième source d'éclairage infrarouge (14) configurée pour éclairer l'iris pendant l'acquisition de la quatrième image.

## Description

### DOMAINE TECHNIQUE

La présente divulgation concerne un dispositif d'acquisition d'images d'un individu à bord d'un véhicule.

### ETAT DE LA TECHNIQUE

On connaît de l'état de la technique un dispositif d'acquisition d'images de l'iris d'un individu à bord d'un véhicule. Le dispositif comprend une caméra et une source d'éclairage configurée pour éclairer l'iris pendant l'acquisition d'une image de l'iris par la caméra. L'image de l'iris peut ensuite être exploitée dans un traitement ultérieur, par exemple pour authentifier l'individu.

Toutefois, il se peut que l'iris ne soit pas bien visible dans l'image acquise, ce qui empêche la réalisation du traitement ultérieur. Par exemple, lorsque l'individu porte des lunettes, un reflet sur les lunettes peut masquer l'iris.

### EXPOSE DE L'INVENTION

Un but de l'invention est de détecter de manière plus fiable l'iris d'un individu à bord d'un véhicule.

Ce but est atteint par un dispositif d'acquisition d'images d'un individu à bord d'un véhicule, le dispositif comprenant : une première caméra configurée pour acquérir une première image montrant l'individu à bord du véhicule ; une deuxième caméra configurée pour acquérir une deuxième image montrant l'individu à bord du véhicule, une unité de traitement pour déterminer des données indicatives d'une position d'un iris de l'individu à partir de la première image et de la deuxième image ; une caméra infrarouge configurée pour être orientée vers l'iris de l'individu à l'aide des données, puis acquérir une troisième image et une quatrième image pendant que la caméra infrarouge est orientée vers l'iris ; une première source d'éclairage infrarouge configurée pour éclairer l'iris pendant l'acquisition de la troisième image ; et une deuxième source d'éclairage infrarouge configurée pour éclairer l'iris pendant l'acquisition de la quatrième image, la deuxième source d'éclairage infrarouge étant distincte de la première source d'éclairage infrarouge 12.

Le dispositif, qui constitue un premier objet de la présente divulgation, peut également comprendre les caractéristiques optionnelles suivantes, prises seules ou en combinaison à chaque fois que cela est possible techniquement.

De préférence, la première caméra, la deuxième caméra et la caméra infrarouge ont des entrées optiques respectives, la première source d'éclairage infrarouge a une première sortie optique, la deuxième source d'éclairage infrarouge a une deuxième sortie optique, la première sortie optique et les entrées optiques délimitent ensemble une première zone de travail visible dans une vue de face du dispositif, la première zone de travail ayant, dans la vue de face, une première dimension mesurée dans une première direction, et une deuxième dimension mesurée dans une deuxième direction perpendiculaire à la première direction. Par ailleurs, la deuxième sortie optique et les entrées optiques délimitent ensemble une deuxième zone de travail visible dans la vue de face, la deuxième zone de travail ayant, dans la vue de face une première dimension mesurée dans la première direction, et une deuxième dimension mesurée dans la deuxième direction. La première dimension de la deuxième zone est supérieure à la première dimension de la première zone et/ou la deuxième dimension de la deuxième zone est inférieure à la deuxième dimension de la première zone.

De préférence, la première dimension de la première zone est comprise entre 200 et 250 millimètres.

De préférence, la deuxième dimension de la première zone est comprise entre 250 et 260 millimètres.

De préférence, la première dimension de la deuxième zone est comprise entre 250 et 320 millimètres.

De préférence, la deuxième dimension de la deuxième zone est comprise entre 120 et 130 millimètres.

De préférence, les entrées optiques sont incluses dans une zone d'acquisition, la première sortie optique est incluse dans une première zone d'éclairage infrarouge séparée de la zone d'acquisition par une première ligne parallèle à la première direction, la première zone de travail étant l'union de la zone d'acquisition et de la première zone d'éclairage infrarouge, et la deuxième sortie optique est incluse dans une deuxième zone d'éclairage infrarouge séparée de la zone d'acquisition par une deuxième ligne parallèle à la deuxième direction, la deuxième zone de travail étant l'union de la zone d'acquisition et de la deuxième zone d'éclairage infrarouge.

De préférence, la deuxième direction est verticale par rapport au sol.

De préférence, la première source d'éclairage infrarouge a une première sortie optique espacée d'au moins 13 centimètres par rapport à une entrée optique de la caméra infrarouge.

De préférence, la deuxième source d'éclairage infrarouge a une deuxième sortie optique espacée d'au moins 13 centimètres par rapport à l'entrée optique de la caméra infrarouge.

De préférence, la première caméra et la deuxième caméra ont des entrées optiques respectives qui sont séparées par une distance d'au moins 20 centimètres.

De préférence, la première caméra et la deuxième caméra ont des entrées optiques respectives ayant des axes optiques qui sont sécants ou qui s'intersectent.

De préférence, le dispositif comprend en outre une source d'éclairage dans le domaine visible configurée pour éclairer l'individu pendant l'acquisition de la première image ou l'acquisition de la deuxième image, dans lequel la première caméra et la deuxième caméra sont sensibles à des longueurs d'ondes émises par la source d'éclairage dans le domaine visible.

De préférence, la caméra infrarouge est configurée pour acquérir une succession d'images comprenant au moins trois images pendant que la caméra infrarouge est orientée vers l'iris, et la première source d'éclairage et la deuxième source d'éclairage sont configurées pour éclairer en alternance l'iris, pendant l'acquisition de la succession d'images.

De préférence, l'unité de traitement est configurée pour détecter si l'iris est visible ou non dans la troisième image, et la caméra infrarouge est configurée pour acquérir la quatrième image à condition que l'unité de traitement ait détecté que l'iris est visible dans la troisième image.

De préférence, le dispositif comprend un bâti propre à être fixé au sol, et un support monté mobile en translation verticale par rapport au bâti et/ou en rotation autour d'un axe vertical par rapport au bâti, le support comprenant la première caméra, la deuxième caméra, la caméra infrarouge, la première source d'éclairage infrarouge et la deuxième source d'éclairage infrarouge.

De préférence, l'unité de traitement est en outre configurée pour : détecter le véhicule dans une image, déterminer une position du support adaptée à la visualisation d'un visage d'un individu à bord du véhicule, déplacer le support par rapport au bâti vers la position.

Un deuxième objet de la présente divulgation est un système comprenant deux dispositifs d'acquisition d'images d'un individu à bord d'un véhicule, chacun des deux dispositifs étant conforme au premier objet de la divulgation, les deux dispositifs étant situés de part et d'autre d'un passage pour le véhicule.

Un troisième objet de la présente divulgation est un procédé d'acquisition d'images d'un individu à bord d'un véhicule, le procédé comprenant les étapes suivantes : acquérir une première image montrant l'individu à bord du véhicule, à l'aide d'une première caméra ; acquérir une deuxième image montrant l'individu à bord du véhicule, à l'aide d'une deuxième caméra ; déterminer des données indicatives d'une position d'un iris de l'individu à partir de la première image et de la deuxième image ; orienter une caméra infrarouge vers l'iris de l'individu à l'aide des données, puis acquérir une troisième image et une quatrième image montrant l'iris, à l'aide de la caméra infrarouge orientée vers l'iris ; éclairer l'iris pendant l'acquisition de la troisième image, à l'aide d'une première source d'éclairage infrarouge ; et éclairer l'iris pendant l'acquisition de la quatrième image, à l'aide d'une deuxième source d'éclairage infrarouge distincte de la première source d'éclairage infrarouge.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un système de contrôle routier selon un mode de réalisation.
La figure 2 est une vue de face d'un dispositif d'acquisition d'image selon un mode de réalisation.
La figure 3 est une vue de face d'un support faisant partie du dispositif d'acquisition d'images de la figure 2.
La figure 4 est une vue schématique, en perspective cavalière, du support de la figure 3, et d'une fenêtre de véhicule.
La figure 5 est une représentation schématique de composants d'un dispositif d'acquisition d'images selon un mode de réalisation.

Sur l'ensemble des figures, les éléments similaires portent des références identiques.

### DESCRIPTION DETAILLEE DE L'INVENTION

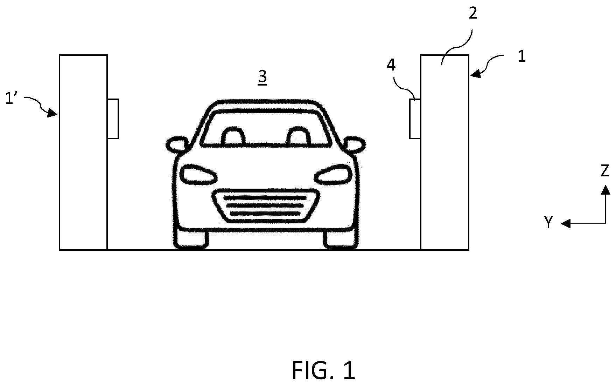

En référence à la **figure 1****,** un système de contrôle routier comprend un dispositif d'acquisition d'images 1.

Le dispositif d'acquisition d'images 1 comprend un bâti 2, également appelé kiosque, destiné à être fixé au sol, typiquement en bordure d'un passage 3 pour un véhicule, et un support 4 mobile en translation verticale par rapport au bâti 2. Ainsi, le support 4 peut être placé à des altitudes différentes par rapport au sol.

Le dispositif 1 comprend par ailleurs une motorisation pour déplacer verticalement le support 4 par rapport au bâti 2.

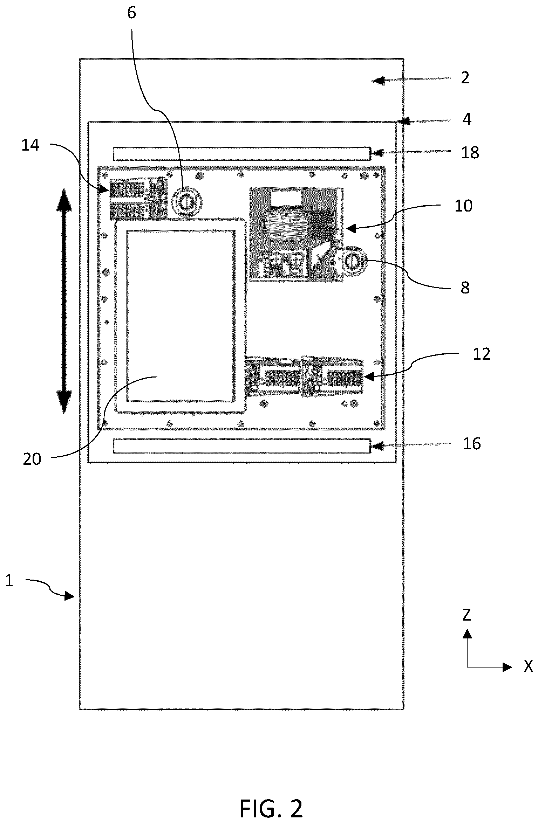

Dans la suite, on se réfèrera à trois directions caractéristiques parallèles à trois axes X, Y et Z formant ensemble un repère orthonormé (l'axe X est visible sur la figure 2).

L'axe Z est un axe vertical (normal au sol). C'est parallèlement à l'axe Z que le support 4 est mobile en translation par rapport au bâti 2 à l'aide de la motorisation.

Le support 4 peut également être mobile en rotation autour d'un axe parallèle à l'axe Z. Une telle rotation permet au support d'être visible depuis un véhicule plus ou moins avancé dans le passage 3. Cette rotation permet en outre d'augmenter le champ d'acquisition par le dispositif optique, notamment de manière à visualiser une personne centrale d'une rangée arrière du véhicule, qui ne sera ainsi plus cachée par la personne la plus proche du kiosque, ou de manière à permettre de visualiser une personne dos à la route, par exemple dans le cas d'une rangée orientée dans le sens contraire du sens d'avancement du véhicule.

Le système comprend un deuxième dispositif 1' d'acquisition d'images. Le deuxième dispositif d'acquisition d'images 1' peut présenter les mêmes caractéristiques que le dispositif d'acquisitions d'images 1.

Les deux dispositifs 1, 1' sont situés de part et d'autre d'un passage 3 pour un véhicule. On verra dans la suite que ces deux dispositifs 1, 1' ont chacun vocation à imager des individus à bord du véhicule, lorsque le véhicule se trouve dans le passage 3.

En référence à la figure 2, le support 4 présente une face avant. La face avant présente une hauteur mesurée parallèlement à l'axe Z, et une largeur mesurée parallèlement à l'axe X. L'axe Y est normal à la face avant.

La face avant est par exemple rectangulaire ou carrée.

La face avant est orientée de manière à être visible depuis le passage 3. Par exemple la face avant est orientée parallèlement à un bord du passage 3. En variante, la face présente un angle fixe (par exemple 20°) par rapport à un tel bord, de sorte qu'un utilisateur situé dans le passage n'ait pas à se tourner à 90° pour observer la face avant. Dans ce cas le kiosque peut être agencé un peu plus en avant, ce qui est plus confortable pour les utilisateurs.

Le support 4 comprend une première caméra 6 ayant un champ de vision orienté vers la route. Comme on le verra dans la suite, la première caméra 6 est destinée à acquérir une image d'un individu se trouvant à bord d'un véhicule se trouvant sur le passage 3.

La première caméra 6 a une première entrée optique débouchant dans la face avant du support 4. La première entrée optique présente un premier axe optique s'étendant parallèlement à l'axe Y ou non.

Le premier axe optique est fixe par rapport au support 4.

La première caméra 6 a un angle de vision d'au moins 40 degrés dans le plan (Y, Z) parallèle au sol, par exemple 53 degrés.

Le support 4 comprend par ailleurs une deuxième caméra 8 ayant un champ de vision orienté vers la route. Comme on le verra dans la suite, la deuxième caméra 8 est destinée à acquérir une image d'un individu se trouvant à bord d'un véhicule se trouvant sur la route.

La deuxième caméra 8 a une deuxième entrée optique débouchant également dans la face avant du support 4. La deuxième entrée optique présente un deuxième axe optique s'étendant parallèlement à l'axe Y ou non.

Le deuxième axe optique est fixe par rapport au support 4.

La deuxième caméra 8 a un angle de vision d'au moins 40 degrés dans le plan (Y, Z) parallèle au sol, par exemple 53 degrés.

Dans un mode de réalisation de la figure 2, le premier axe optique et le deuxième axe optique sont parallèles (à l'axe Y). Dans un autre mode de réalisation, le premier axe optique et le deuxième axe optique sont sécants. Par exemple, le première axe optique et le deuxième axe optiques s'intersectent en un point qui se trouve dans le passage 3. Il peut en particulier être prévu qu'un axe parmi le premier axe optique et le deuxième axe optique soit parallèle à l'axe Y (dont normal à la direction de la route), et que l'autre axe parmi le premier axe optique et le deuxième axe optique soit orienté légèrement vers l'arrière, en se référant à un sens de circulation de véhicules sur la route.

Les deux caméras 6, 8 ont vocation à imager un même individu à bord d'un véhicule, et possiblement plusieurs individus, en particulier leurs visages.

La deuxième caméra 8 peut être identique à la première caméra 6 (leurs positions respectives mises à part).

La première caméra 6 et la deuxième caméra 8 fonctionnent dans le domaine visible, dans le sens où ces caméras sont sensibles à des longueurs d'onde dans le domaine visible.

Le dispositif comprend en outre une caméra infrarouge 10, qui est distincte de la première caméra 6 et de la deuxième caméra 8.

La caméra infrarouge 10 comprend une troisième entrée optique débouchant également dans la face avant du support 4.

La caméra infrarouge a un angle de vision plus étroit que les caméras 6, 8.

L'entrée optique de la caméra infrarouge a un troisième axe optique mobile en rotation par rapport au support 4, de préférence mobile en rotation autour de deux axes orthogonaux (par exemple parallèles aux axes X et Z, respectivement). De la sorte, la caméra infrarouge 10 peut effectuer un balayage horizontal par exemple sur au moins 40 degrés, par exemple 53 degrés, et un balayage vertical par exemple sur au moins 40 degrés, par exemple 53 degrés.

La caméra infrarouge 10 comprend une motorisation pour changer l'orientation du troisième axe optique par rapport au support 4.

La caméra infrarouge comprend un système de focalisation permettant de faire varier la position d'un plan de netteté dans une plage de positions, par exemple une plage faisant 100 centimètres de longueur., par exemple la distance entre la position du plan de netteté et le support 4 s'étend sur une plage allant de 50 centimètres à 150 centimètres.

Dans un mode de réalisation, la caméra infrarouge 10 comprend un miroir réfléchissant et deux objectifs. Le miroir forme la troisième entrée optique de la caméra infrarouge 10, dans le sens où un rayon lumineux en provenant de l'extérieur du dispositif se réfléchit sur le miroir avant d'atteindre les objectifs. Le miroir réfléchissant est mobile en rotation par rapport au support 4. Les deux objectifs de la caméra infrarouge 10 sont orientés de sorte que leurs axes optiques sont verticaux. Cette disposition permet de réduire la profondeur du support 4 (mesurée parallèlement à l'axe Y).

La caméra infrarouge 10 est sensible à des longueurs d'ondes dans le domaine infrarouge. Elle n'est pas sensible à des longueurs d'ondes dans le domaine visible.

Le dispositif 1 comprend par ailleurs une première source d'éclairage infrarouge 12 configurée pour éclairer l'iris pendant l'acquisition d'une image par la caméra infrarouge 10.

La première source d'éclairage infrarouge 12 est configurée pour émettre de la lumière ayant des longueurs d'onde infrarouge auxquelles la caméra infrarouge 10 est sensible.

La première source d'éclairage infrarouge 12 comprend une première sortie optique qui débouche dans la face avant du support 4. De la sorte, la lumière émise par la première source d'éclairage infrarouge 12 éclaire la route, et possiblement un véhicule se trouvant dans le passage 3.

Dans un mode de réalisation, la première source d'éclairage infrarouge 12 comprend une pluralité de diodes électroluminescentes (DEL) infrarouges. Les DELs sont par exemple disposées en rangées horizontales et en colonnes verticales de sorte à former une matrice de DELs. Une matrice de DELs a pour avantage de ne pas générer des reflets trop larges sur des verres de lunettes.

Le dispositif 1 comprend par ailleurs une deuxième source d'éclairage infrarouge 14 configurée pour éclairer l'iris pendant l'acquisition d'une image par la caméra infrarouge 10. La deuxième source d'éclairage infrarouge 14 est distincte de la première source d'éclairage infrarouge 12.

La deuxième source d'éclairage infrarouge 14 est configurée pour émettre de la lumière ayant des longueurs d'onde infrarouge auxquelles la caméra infrarouge 10 est sensible.

La deuxième source d'éclairage infrarouge 14 comprend une deuxième sortie optique qui débouche dans la face avant du support 4. De la sorte, la lumière émise par la première source d'éclairage infrarouge 14 éclaire la route, et possiblement un véhicule se trouvant dans le passage 3.

Dans un mode de réalisation, la deuxième source d'éclairage infrarouge 14 comprend une pluralité de diodes électroluminescentes (DEL) infrarouges. Les DELs sont par exemple disposées en rangées horizontales et en colonnes verticales de sorte à former une matrice de DELs.

La deuxième source d'éclairage infrarouge 14 peut être identique à la première source d'éclairage infrarouge 12, leurs positions respectives mises à part.

Le dispositif 1 comprend par ailleurs une première source d'éclairage dans le domaine visible 16. La première source d'éclairage dans le domaine visible 16 comprend une sortie optique débouchant dans la face avant du support 4. La sortie optique de la première source d'éclairage dans le domaine visible 16 présente par exemple une forme de bande allongée horizontalement (parallèlement à l'axe X).

Le dispositif comprend par ailleurs une deuxième source d'éclairage dans le domaine visible 18. La deuxième source d'éclairage dans le domaine visible 18 comprend une sortie optique débouchant dans la face avant du support 4. La sortie optique de la deuxième source d'éclairage dans le domaine visible 18 présente par exemple une forme de bande allongée horizontalement (parallèlement à l'axe X).

Le dispositif 1 comprend par ailleurs un écran d'affichage 20. Cet écran d'affichage 20 débouche dans la face avant du support 4, de sorte à pouvoir être vu depuis le passage 3, en particulier par un individu à bord d'un véhicule se trouvant dans le passage 3. L'écran d'affichage est par exemple tactile.

Le support 4 peut en outre présenter une vitre avant pour camoufler tout ou partie des composants optiques listés précédemment.

Dans un mode de réalisation, la vitre est transparente aux longueurs d'ondes infrarouges discutées précédemment et opaques aux longueurs d'ondes dans le domaine visible. Les composants optiques infrarouges sont masqués par la vitre. Ainsi, sont agencés derrière la vitre : les sorties optiques des sources d'éclairage 12 et 14, et l'entrée optique de la caméra infrarouge 10. En revanche, la vitre présente des ouvertures pour les composants optiques fonctionnant dans le domaine visible : les entrées optiques respectives de la première caméra 6 et de la deuxième caméra 8, ainsi que l'écran d'affichage 20.

### Positionnement relatif des sources et des caméras dans une vue avant du dispositif

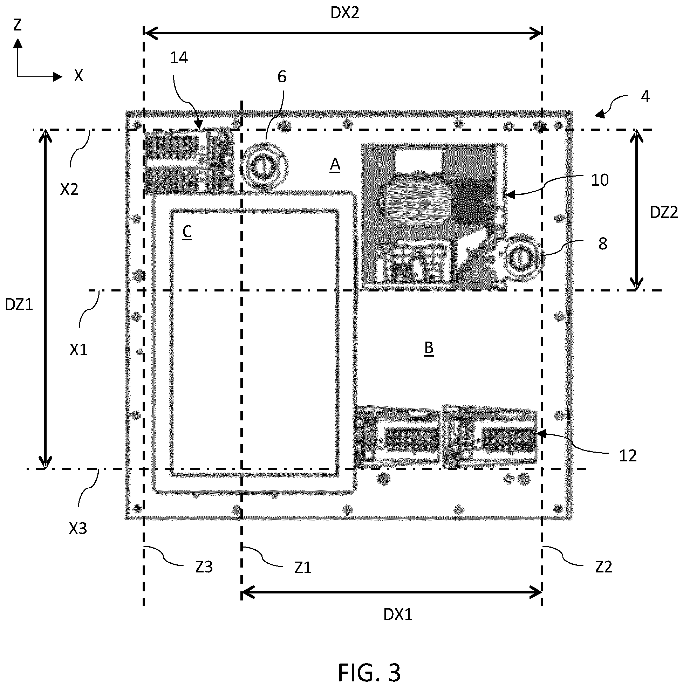

On va maintenant discuter du positionnement relatif des entrées optiques des différentes caméras 6, 8, 10 et des sorties optiques des différentes sources d'éclairages 12, 14, 16, 18 dans une vue avant du support 4, cette vue avant étant illustrée sur la figure 2 et sur la figure 3. La vue avant est perpendiculaire à l'axe Y, et parallèle au plan (X, Z).

La première entrée optique (de la première caméra 6) , la deuxième entrée optique (de la deuxième caméra 8) et la troisième entrée optique (de la caméra infrarouge 10) sont localisées entre les sorties optiques des sources d'éclairage dans le domaine visible 14, 16.

La première entrée optique (de la première caméra 8), la deuxième entrée optique (de la deuxième caméra 10), la troisième entrée optique (de la caméra infrarouge 10) et la sortie optique de la première source d'éclairage infrarouge 12 délimitent ensemble une première zone de travail.

La première zone de travail est rectangulaire.

La première zone de travail est divisée en deux en zones A et B par une première ligne X1 parallèle à une première direction. Dans le mode de réalisation illustré en figure 3, la première direction est parallèle à l'axe X, donc perpendiculaire à la direction de translation du support 4 par rapport au bâti 2.

La zone A inclut la première entrée optique (de la première caméra 8), la deuxième entrée optique (de la deuxième caméra 10) et la troisième entrée optique (de la caméra infrarouge 10). Par convention, on peut appeler la zone A « zone d'acquisition » puisque des rayons doivent passer par cette zone pour atteindre l'une ou l'autre des caméras 6, 8, 10. La zone A est rectangulaire.

La zone B inclut la sortie optique de la première source d'éclairage infrarouge 12. On peut donc appeler la zone rectangulaire B « première zone d'éclairage infrarouge », puisque des rayons infrarouges émanant de la première source d'éclairage 12 passent dans cette zone. La zone B est rectangulaire.

Par ailleurs, la première entrée optique (de la première caméra 8), la deuxième entrée optique (de la deuxième caméra 10), la troisième entrée optique (de la caméra infrarouge 10) et la sortie optique de la deuxième source d'éclairage infrarouge 14 délimitent ensemble une deuxième zone de travail différente de la deuxième zone de travail.

La deuxième zone de travail est divisée en deux zones A et C par une première ligne Z1 parallèle à une deuxième direction perpendiculaire à la première direction. Dans le mode de réalisation illustré en figure 3, la deuxième direction est parallèle à l'axe Z, donc correspond à la direction de translation du support 4 par rapport au bâti 2.

La zone C inclut la sortie optique de la deuxième source d'éclairage infrarouge 14. On peut donc appeler la zone C « deuxième zone d'éclairage infrarouge », puisque des rayons infrarouges émanant de la première source d'éclairage 12 passent dans cette zone C. La zone C est rectangulaire.

Avec la disposition qui précède, les trois zones A, B, C forment ensemble un L (la zone A formant le « coin » du L). Une telle disposition offre un compromis avantageux entre réduction d'encombrement du support 4 dans le plan (X, Z) et performances du dispositif 1. En effet, cette disposition respecte plusieurs contraintes en même temps :
- Elle permet au support 4 d'avoir une hauteur et une largeur relativement réduites.
- La deuxième source d'éclairage infrarouge 14 reste relativement éloignée de la première source d'éclairage 12, pour réduire les risques de non-détection d'iris (par exemple en raison d'un reflet sur une paire de lunettes).
- Chacune des sources d'éclairage 12 et 14 reste relativement éloignée de la caméra infrarouge 10.

La première zone de travail, que l'on note par convention « A+B » pour signifier qu'elle constitue l'union des zones A et B, est délimitée par deux autres lignes parallèles à la première direction, notées X2 et X3.

La zone A est délimitée selon l'axe Z par la ligne X1 et par la ligne X2. Autrement dit, la première entrée optique (de la première caméra 8), la deuxième entrée optique (de la deuxième caméra 10), la troisième entrée optique (de la caméra infrarouge 10) se trouvent entre les lignes X1, X2.

La zone B est délimitée selon l'axe Z par la ligne X1 et par la ligne X3. Autrement dit, la sortie optique de la première source d'éclairage infrarouge 12 se trouve entre les lignes X1, X3.

La deuxième zone de travail, que l'on note par convention « A+C » pour signifier qu'elle constitue l'union des zones A et C, est délimitée par deux autres lignes parallèles à la première direction, notées Z2 et Z3.

La sous-zone A est délimitée selon l'axe X par la ligne Z1 et par la ligne Z2. Autrement dit, la première entrée optique (de la première caméra 8), la deuxième entrée optique (de la deuxième caméra 10), la troisième entrée optique (de la caméra infrarouge 10) se trouvent entre les lignes Z1, Z2.

La zone B est délimitée selon l'axe X par la ligne Z1 et par la ligne Z3. Autrement dit, la sortie optique de la deuxième source d'éclairage infrarouge 14 se trouve entre les lignes Z1, Z3.

La première zone A+B a une première dimension DX1, mesurée dans la première direction, constituant une distance entre les lignes Z1 et Z2.

La première zone A+B a une deuxième dimension DZ1, mesurée dans la deuxième direction, constituant une distance entre les lignes X2 et X3.

La deuxième zone A+C a une première dimension DX2, mesurée dans la première direction, constituant une distance entre les lignes Z2 et Z3.

La deuxième zone A+C a une deuxième dimension DZ2, mesurée dans la deuxième direction, constituant une distance entre les lignes X1 et X2.

On a DX2 > DX1. Lorsque la première direction est horizontale, comme c'est le cas du mode de réalisation représenté en figure 3, cela implique que la deuxième zone A+C est plus large que la première zone A+B.

On a par ailleurs DZ2 < DZ1. Lorsque la deuxième direction est verticale, comme c'est le cas du mode de réalisation représenté en figure 3, cela implique que la deuxième zone A+C est moins haute (plus étroite en hauteur) que la première zone A+B.

De préférence, DX1 est compris entre 200 et 250 millimètres, par exemple égale à 245 millimètres.

De préférence, DZ1 est compris entre 250 et 260 millimètres, par exemple égale à 255 millimètres.

De préférence, DX2 est compris entre 250 et 320 millimètres, par exemple égale à 317 millimètres.

De préférence, DZ2 est compris entre 120 et 130 millimètres, par exemple égale à 121 millimètres.

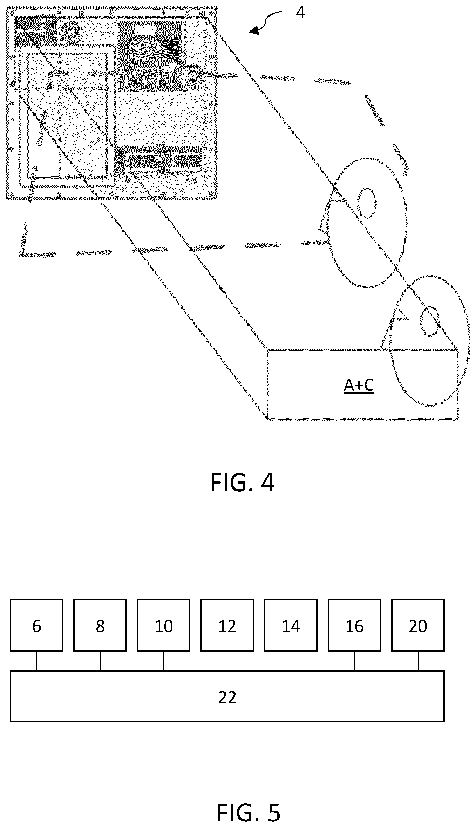

Ces caractéristiques qui précèdent contribuent chacune à leur manière à pouvoir imager un individu se trouvant derrière une fenêtre d'un véhicule se trouvant dans le passage 3. La figure 4 montre schématiquement que la deuxième zone A+C se projette dans une fenêtre de véhicule de dimensions moyennes (dont le contour est représenté par une ligne en pointillés fermée sur elle-même).

En particulier, le fait que la première zone et la deuxième zone aient des dimensions différentes permet au dispositif de s'ajuster à des fenêtres de véhicules différentes, permettant ainsi au dispositif 1 d'être utilisé pour des véhicules de différentes dimensions.

Par ailleurs, la première source d'éclairage infrarouge 12 a une sortie optique espacée d'au moins 13 centimètres par rapport à une entrée optique de la caméra infrarouge 10, et/ou la deuxième source d'éclairage infrarouge 14 a une sortie optique espacée d'au moins 13 centimètres, voire 20 centimètres, par rapport à l'entrée optique de la caméra infrarouge 10. Les inventeurs ont pu constater que cette distance minimale de 13 centimètres permet d'éviter un effet « yeux rouges » dans une image acquise par la caméra infrarouge 10. En effet, avec une telle distance, l'angle entre une ligne allant de la source d'éclairage 12 ou 14 à un iris d'un individu à bord d'un véhicule dans le passage 3 et une ligne allant de l'iris à l'entrée optique de la caméra infrarouge est supérieur à 5 degrés lorsque l'iris se trouve à moins de 1,5 mètres. Or, les inventeurs ont pu constater que, dans la pratique, un conducteur de véhicule va avoir tendance à placer son véhicule à une distance telle que les iris de tout individu à l'intérieur du véhicule se trouve à une distance inférieure ou égale à 1,5 mètres d'un équipement latéral.

En outre, la première caméra 6 et la deuxième caméra 8 sont de préférence distantes l'une de l'autre d'au moins 20 centimètres. Ceci améliore la capacité du dispositif 1 à détecter des fraudes à l'aide d'images acquises par les deux caméras 6, 8.

En référence à la figure 5, le dispositif 1 comprend par ailleurs une unité de traitement 22 capable d'interagir avec les composants 6, 8, 10, 12, 14, 16, 18, 20 décrits précédemment.

L'unité de traitement 22 est en particulier capable de commander l'acquisition d'images par les caméras 6, 8, 10, et d'obtenir ces images.

L'unité de traitement 22 est par ailleurs capable de commander les sources d'éclairages 14, 16, 18, de sorte que ces sources d'éclairages émettent de la lumière ou non, et ce de manière indépendante.

L'unité de traitement 22 est en outre capable de commander l'affichage, par l'écran d'affichage 20, d'informations destinés à un individu à bord d'un véhicule dans le passage 3.

L'unité de traitement comprend un module de localisation ayant pour fonction d'appliquer un traitement de localisation prenant en entrée des images fournies respectivement par la première caméra 6 et la deuxième caméra 8. Le fonctionnement de ce module sera décrit plus loin.

L'unité de traitement 22 peut avoir n'importe quelle structure. L'unité de traitement peut en particulier comprendre une mémoire stockant un programme de traitement comprenant des instructions de code, et au moins un processeur pour exécuter ces instructions de code, afin de causer l'un ou l'autre des traitements précités, et que l'on va décrire plus en détail dans la suite.

Le dispositif 1' peut comprendre toutes les caractéristiques du dispositif 1 telles que décrites précédemment.

On va maintenant décrire un procédé mis en œuvre par le système, en particulier par le dispositif 1.

Dans une étape de détection, l'unité de traitement 22 détecte l'entrée d'un véhicule dans le passage 3. Cette détection peut se faire par exemple à l'aide d'une caméra de détection de véhicule, qui peut être l'un des caméras 6 ou 8, ou bien une autre caméra à champ plus large que les caméra 6, 8.

La détection peut être réalisée lorsque le véhicule est à l'arrêt, ou bien lorsque le véhicule est en approche.

L'unité de traitement 22 détermine une position pour le support 4 qui est adaptée à la visualisation d'un visage d'un individu à bord du véhicule.

Dans un mode de réalisation, l'unité de traitement 22 analyse l'image produite par la caméra de détection de véhicule pour y détecter une classe de véhicules à laquelle le véhicule appartient (moto, voiture, camion ou vélo). La détection de la classe peut solliciter une intelligence artificielle entraînée à cet effet. Lorsque la classe se rapporte à des véhicules à fenêtre (camion, voiture), alors l'unité de traitement détecte dans l'image un contour d'une fenêtre du véhicule. Sur la base de ce contour, l'unité de traitement détermine l'altitude d'un centre de la fenêtre. La position que doit atteindre le support 4 est déduite de la position du centre de la fenêtre.

Dans une étape d'ajustement vertical, l'unité de traitement 22 commande un déplacement en translation parallèlement à l'axe Z du support vers la position déterminée. Lorsqu'une telle mobilité est possible, l'unité de traitement 22 peut également commander une rotation du support 4 par rapport au bâti 2 autour d'un axe de rotation également parallèle à l'axe X.

Ensuite, l'unité de traitement 22 active les sources d'éclairage dans le domaine visible 16, 18 (ou seulement l'une des deux). Le véhicule et ses occupants sont alors éclairés par une lumière dans le domaine visible.

Pendant cet éclairage, la première caméra 6 acquiert une première image montrant un individu à bord du véhicule, et la deuxième caméra 8 acquiert une deuxième image montrant l'individu à bord du véhicule.

L'unité de traitement 22 se fonde sur la première image et la deuxième image pour déterminer par stéréoscopie des données indicatives de la position d'un iris de l'individu, à l'aide d'une méthode connue. Au cours de cette étape, l'unité de traitement 22 peut commencer par détecter des visages dans les images et les mettre en correspondance. Les données indicatives de positions sont par exemples des coordonnées cartésiennes, ou bien comprendre des angles.

Ensuite, l'unité de traitement 22 commande une orientation de l'entrée optique de la caméra infrarouge 10, vers la position d'iris déterminée, afin que cette caméra infrarouge pointe sur l'iris de l'individu.

L'unité de traitement peut également commander à la caméra infrarouge 10 d'utiliser son système de focalisation pour de se focaliser sur la position en question, afin d'imager de manière nette cet iris (c'est-à-dire ajuster la distance focale de la caméra infrarouge 10 à une distance séparant la caméra 10 de la position de l'iris.

L'unité de traitement 22 active la première source d'éclairage infrarouge 12. Un rayonnement infrarouge est ainsi émis en direction du véhicule, et en particulier vers la position d'iris déterminée. Pendant cet éclairage, la caméra infrarouge acquiert une troisième image. Ensuite, l'unité de traitement 22 désactive la première source d'éclairage infrarouge 12.

Ensuite, l'unité de traitement 22 active la deuxième source d'éclairage infrarouge 14. Un rayonnement infrarouge est ainsi émis en direction du véhicule, et en particulier vers la position d'iris déterminée, mais selon un angle différent par rapport à auparavant. Pendant cet éclairage, la caméra infrarouge acquiert une quatrième image. Ensuite, l'unité de traitement 22 désactive la deuxième source d'éclairage 14.

Ainsi, l'unité de traitement 22 obtient deux images différentes, qui dans une situation normale montrent l'iris étant donné que la caméra infrarouge était pointée lors de leur acquisition vers la position de l'iris. Toutefois, l'iris peut être masqué par un obstacle dans la troisième image ou dans la quatrième image, par exemple par un reflet sur un verre de lunettes.

En effet en cas de port de lunettes, il peut y avoir un reflet direct de notre propre éclairage sur les lunettes (sur un ou 2 dioptres) qui, vu de la caméra, est superposé sur l'iris. Environ 15% des acquisitions souffrent de ce problème. La position du deuxième éclairage permet d'obtenir une géométrie significativement différente et de faire en sorte que, pour la même position de lunette, le reflet est « déplacé » par rapport au reflet obtenu avec le premier éclairage.

Ainsi, la présence dans le dispositif 1 des deux sources d'éclairage infrarouge 12 et 14 augmente les chances d'imager correctement l'iris d'un passager ayant des lunettes. La probabilité qu'un reflet tombe sur l'iris avec les deux éclairages disponibles est beaucoup plus faible que la probabilité d'avoir un reflet sur l'iris avec un seul éclairage.

Dans un mode de réalisation, les deux images sont acquises successivement de manière inconditionnelle, et leur contenu est vérifié par l'unité de traitement 22 dans un second temps.

Dans un autre mode de réalisation, l'unité de traitement acquiert la troisième image (sous l'éclairage de la première source d'éclairage infrarouge 12), et vérifie le contenu de la troisième image. Si l'unité de traitement 22 constate que l'iris n'est pas visible dans la troisième image, alors l'unité de traitement 22 commande l'acquisition de la quatrième image (sous l'éclairage de la deuxième source d'éclairage infrarouge 14). Si l'iris est visible dans la troisième image, la deuxième source d'éclairage infrarouge 14 n'est pas sollicitée.

Bien entendu, la caméra infrarouge peut ne pas se borner à acquérir seulement deux images de l'iris, mais plus généralement une succession d'images dont le nombre d'images est supérieur ou égal à trois. L'unité de traitement 22 utilise en alternance les sources 12 et 14 si bien qu'une image sur deux est acquise sous l'éclairage de la première source d'éclairage infrarouge 12, et une image sur deux est acquise sous l'éclairage de la deuxième source d'éclairage 14.

En outre, l'unité de traitement 22 peut sélectionner seulement l'une des deux sources 12 et 14, par exemple la source 14, lorsqu'il a été déterminé que la hauteur d'une vitre du véhicule est inférieure à un certain seuil H2 (par exemple 255 millimètres).

Toutes les étapes qui précèdent ont été décrites pour un individu à bord du véhicule.

Au cours du procédé, l'unité de traitement 22 peut commander l'affichage de messages à destination d'un individu à bord du véhicule, par exemple le conducteur, sur l'écran d'affichage 20. Ces messages peuvent par exemple inviter le conducteur à baisser la vitre de son véhicule ou lui donner d'autres instructions de placement de son visage en vue du dispositif 1.

Ces étapes peuvent être mises en œuvre pour plusieurs individus à bord du même véhicule. En effet, plusieurs visages de personnes peuvent être détectés par l'unité de traitement 22 dans des images acquises par les caméras 6, 8.

Par ailleurs, les étapes qui précèdent peuvent être réalisées non seulement par le dispositif 1 mais aussi par le dispositif 1' situé de l'autre côté du passage 3 dans lequel se trouve le véhicule. Le dispositif 1' peut ainsi permettre d'imager l'iris d'un individu que ne peut pas voir le dispositif 1, par exemple parce que l'individu a le visage tourné vers le côté, en direction du dispositif 1', ou parce qu'il existe un obstacle entre l'individu et le dispositif 1 (tel qu'un autre individu placé à côté).

Dans une application particulière, le dispositif 1 (ou bien plus généralement le système comprenant les dispositifs 1 et 1') vérifie que le nombre d'individus à bord du véhicule dans le passage 3 est conforme à un nombre prédéfini. L'unité de traitement 22 peut compter les individus dont les visages sont visibles dans les images acquises par les caméras 6, 8, et produire une liste d'individus détectés.

Ensuite, l'acquisition d'images d'iris peut être réalisée individu par individu, selon un ordre prédéfini par l'unité de traitement 22. En particulier, l'unité de traitement 22 peut utiliser comme critère d'ordonnancement des individus détectés :
- une distance estimée entre l'individu et le dispositif 1,
- un écart en pixels, dans l'une des images acquises, entre le visage de l'individu et un centre de l'image.

Le dispositif qui précède est applicable à tout véhicule, pas seulement ceux pourvus de fenêtres.

Il a été présenté ci-dessus un système à deux dispositifs d'acquisition 1 et 1'. Le nombre de dispositifs d'acquisition est cependant différent dans d'autres modes de réalisation. Dans un mode de réalisation, le système ne comprend que le dispositif d'acquisition 1. Dans un autre mode de réalisation à quatre dispositif d'acquisition, les dispositifs 1 et 1' sont agencés mutuellement en regard, de sorte à pouvoir imager simultanément les passages d'une rangée avant du véhicule (incluant ainsi le conducteur du véhicule), et le système comprend en outre deux dispositifs d'acquisition supplémentaires agencés en regard, de sorte à pouvoir imager simultanément une rangée arrière du véhicule.

Il a été supposé précédemment que la première caméra 6 et la deuxième caméra 8 fonctionnent dans le domaine visible. Toutefois, ce n'est pas obligatoire : l'une ou l'autre des caméras 6, 8 pourrait en variante être une caméra infrarouge (voire les deux), auquel cas l'un et/ou l'autre des sources d'éclairage 14, 16 est également infrarouge.

Il a par ailleurs été supposé que la caméra infrarouge 10 acquiert de manière séquentielle deux images en utilisant les sources d'éclairage infrarouge 12 et 14 l'une après l'autre. Ceci est simple à réaliser. Toutefois, dans un autre mode de réalisation, la caméra 10 peut acquérir ces deux images avec les sources d'éclairage 12 et 14 actives simultanément. Pour cela, il peut être prévu que les longueurs d'ondes émises par les sources 12 et 14 soient différentes, et le dispositif 1 comprendre des filtres en longueurs d'onde correspondants. Alternativement ou à titre complémentaire, la caméra 10 peut être apte à distinguer différentes polarisations de la lumière, par exemple à l'aide d'une caméra monochrome ou à l'aide d'un ou plusieurs polariseurs appropriés.

## Revendications

1. Dispositif (1) d'acquisition d'images d'un individu à bord d'un véhicule, le dispositif (1) comprenant :
• une première caméra (6) configurée pour acquérir une première image montrant l'individu à bord du véhicule,
• une deuxième caméra (8) configurée pour acquérir une deuxième image montrant l'individu à bord du véhicule,
• une unité de traitement (22) configurée pour déterminer des données indicatives d'une position d'un iris de l'individu à partir de la première image et de la deuxième image,
• une caméra infrarouge (10) configurée pour être orientée vers l'iris de l'individu à l'aide des données, puis acquérir une troisième image et une quatrième image pendant que la caméra infrarouge (10) est orientée vers l'iris,
• une première source d'éclairage infrarouge (12) configurée pour éclairer l'iris pendant l'acquisition de la troisième image,
• une deuxième source d'éclairage infrarouge (14) configurée pour éclairer l'iris pendant l'acquisition de la quatrième image, la deuxième source d'éclairage infrarouge (14) étant distincte de la première source d'éclairage infrarouge (12).

2. Dispositif (1) selon la revendication précédente, dans lequel :
• la première caméra (6), la deuxième caméra (8) et la caméra infrarouge (10) ont des entrées optiques respectives,
• la première source d'éclairage infrarouge (12) a une première sortie optique,
• la deuxième source d'éclairage infrarouge (14) a une deuxième sortie optique,
• la première sortie optique et les entrées optiques délimitent ensemble une première zone de travail (A+B) visible dans une vue de face du dispositif (1), la première zone de travail (A+B) ayant, dans la vue de face :
• une première dimension (DX1) mesurée dans une première direction (X), et
• une deuxième dimension (DZ1) mesurée dans une deuxième direction (Z) perpendiculaire à la première direction (X),
• la deuxième sortie optique et les entrées optiques délimitent ensemble une deuxième zone de travail (A+C) visible dans la vue de face, la deuxième zone de travail (A+C) ayant, dans la vue de face :
• une première dimension (DX2) mesurée dans la première direction (X), et
• une deuxième dimension (DZ2) mesurée dans la deuxième direction (Z),
• dans lequel la première dimension (DX2) de la deuxième zone (A+C) est supérieure à la première dimension (DX1) de la première zone (A+B) et/ou la deuxième dimension (DZ2) de la deuxième zone (A+C) est inférieure à la deuxième dimension (DZ1) de la première zone (A+B).

3. Dispositif (1) selon la revendication précédente, dans lequel :
• la première dimension (DX1) de la première zone (A+B) est comprise entre 200 et 250 millimètres, et/ou
• la deuxième dimension (DZ1) de la première zone (A+B) est comprise entre 250 et 260 millimètres, et/ou,
• la première dimension (DX2) de la deuxième zone (A+C) est comprise entre 250 et 320 millimètres, et/ou.
• la deuxième dimension (DZ2) de la deuxième zone (A+C) est comprise entre 120 et 130 millimètres.

4. Dispositif (1) selon l'une quelconque des revendications 2 et 3, dans lequel :
• les entrées optiques sont incluses dans une zone d'acquisition (A),
• la première sortie optique est incluse dans une première zone d'éclairage infrarouge (B) séparée de la zone d'acquisition (A) par une première ligne (X1) parallèle à la première direction (X), la première zone de travail (A+B) étant l'union de la zone d'acquisition (A) et de la première zone d'éclairage infrarouge (B),
• la deuxième sortie optique est incluse dans une deuxième zone d'éclairage infrarouge (C) séparée de la zone d'acquisition (A) par une deuxième ligne (Z1) parallèle à la deuxième direction (Z), la deuxième zone de travail (A+C) étant l'union de la zone d'acquisition (A) et de la deuxième zone d'éclairage infrarouge (C).

5. Dispositif (1) selon l'une quelconque des revendications 2 à 4, dans lequel la deuxième direction est verticale par rapport au sol.

6. Dispositif (1) selon l'une quelconque des revendications précédentes, dans lequel :
• la première source d'éclairage infrarouge (12) a une première sortie optique espacée d'au moins 13 centimètres par rapport à une entrée optique de la caméra infrarouge (10), et/ou
• la deuxième source d'éclairage infrarouge (14) a une deuxième sortie optique espacée d'au moins 13 centimètres par rapport à l'entrée optique de la caméra infrarouge (10).

7. Dispositif (1) selon l'une quelconque des revendications précédentes, dans lequel la première caméra (6) et la deuxième caméra (8) ont des entrées optiques respectives qui sont séparées par une distance d'au moins 20 centimètres.

8. Dispositif (1) selon l'une quelconque des revendications précédentes, dans lequel dans lequel la première caméra (6) et la deuxième caméra (8) ont des entrées optiques respectives ayant des axes optiques qui sont sécants ou qui s'intersectent.

9. Dispositif (1) selon l'une quelconque des revendications précédentes, comprenant en outre :
• une source d'éclairage dans le domaine visible (14, 16) configurée pour éclairer l'individu pendant l'acquisition de la première image ou l'acquisition de la deuxième image,
• dans lequel la première caméra (6) et la deuxième caméra (8) sont sensibles à des longueurs d'ondes émises par la source d'éclairage dans le domaine visible (14, 16).

10. Dispositif (1) selon l'une quelconque des revendications précédentes, dans lequel la caméra infrarouge (10) est configurée pour acquérir une succession d'images comprenant au moins trois images pendant que la caméra infrarouge (10) est orientée vers l'iris, et la première source d'éclairage (12) et la deuxième source d'éclairage (14) sont configurées pour éclairer en alternance l'iris, pendant l'acquisition de la succession d'images.

11. Dispositif (1) selon l'une quelconque des revendications 1 à 9, dans lequel :
• l'unité de traitement (22) est configurée pour détecter si l'iris est visible ou non dans la troisième image,
• la caméra infrarouge (8) est configurée pour acquérir la quatrième image à condition que l'unité de traitement (22) ait détecté que l'iris est visible dans la troisième image.

12. Dispositif (1) selon l'une quelconque des revendications précédentes, comprenant :
• un bâti (2) propre à être fixé au sol,
• un support (4) monté mobile en translation verticale par rapport au bâti (2) et/ou en rotation autour d'un axe vertical par rapport au bâti (2), le support (4) comprenant la première caméra (6), la deuxième caméra (8), la caméra infrarouge (10), la première source d'éclairage infrarouge (12) et la deuxième source d'éclairage infrarouge (14).

13. Dispositif (1) selon la revendication précédente, dans lequel l'unité de traitement (22) est en outre configurée pour :
• détecter le véhicule dans une image,
• déterminer une position du support (4) adaptée à la visualisation d'un visage d'un individu à bord du véhicule,
• déplacer le support (4) par rapport au bâti (2) vers la position.

14. Système comprenant deux dispositifs (1, 1') d'acquisition d'images d'un individu à bord d'un véhicule, chacun des deux dispositifs (1, 1') étant selon l'une quelconque des revendications précédentes, les deux dispositifs (1, 1') étant situés de part et d'autre d'un passage (3) pour le véhicule.

15. Procédé d'acquisition d'images d'un individu à bord d'un véhicule, le procédé comprenant les étapes suivantes :
• acquérir une première image montrant l'individu à bord du véhicule, à l'aide d'une première caméra (6),
• acquérir une deuxième image montrant l'individu à bord du véhicule, à l'aide d'une deuxième caméra (8),
• déterminer des données indicatives d'une position d'un iris de l'individu à partir de la première image et de la deuxième image,
• orienter une caméra infrarouge (10) vers l'iris de l'individu à l'aide des données, puis acquérir une troisième image et une quatrième image montrant l'iris, à l'aide de la caméra infrarouge (10) orientée vers l'iris,
• éclairer l'iris pendant l'acquisition de la troisième image, à l'aide d'une première source d'éclairage infrarouge (12),
• éclairer l'iris pendant l'acquisition de la quatrième image, à l'aide d'une deuxième source d'éclairage infrarouge (14) distincte de la première source d'éclairage infrarouge (12).
